(19) **Europäisches Patentamt / European Patent Office / Office européen des brevets**

(11) **EP 1 584 899 B1**

(12) **FASCICULE DE BREVET EUROPEEN**

(45) Date de publication et mention
de la délivrance du brevet:
**04.07.2007 Bulletin 2007/27**

(51) Int Cl.:
***G01D 5/22*** (2006.01)

(21) Numéro de dépôt: **05300178.0**

(22) Date de dépôt: **10.03.2005**

(54) **Capteur de position d'un actionneur de soupape d'un moteur à combustion interne**

Positionssensor eines Ventilschalters an einem Verbrennungsmotor

Position sensor of a valve actuator of an internal combustion motor

(84) Etats contractants désignés:
**AT BE BG CH CY CZ DE DK EE ES FI FR GB GR HU IE IS IT LI LT LU MC NL PL PT RO SE SI SK TR**

(30) Priorité: **06.04.2004 FR 0403617**

(43) Date de publication de la demande:
**12.10.2005 Bulletin 2005/41**

(73) Titulaire: **Peugeot Citroen Automobiles SA
78140 Vélizy Villacoublay (FR)**

(72) Inventeurs:
  • **Baldi, Christophe
  75011 Paris (FR)**
  • **Lalu, Daniel
  77240 Cesson (FR)**

(74) Mandataire: **Grynwald, Albert et al
SCHMIT - CHRETIEN - SCHIHIN SNC - CABINET GRYNWALD
16 Rue de la Paix
75002 Paris (FR)**

(56) Documents cités:
**DE-A1- 3 329 515          DE-A1- 3 602 107
US-A- 4 100 480            US-A1- 2002 097 042
US-B2- 6 681 728**

**Description**

L'invention concerne un capteur de position d'un actionneur de soupape pour un moteur à combustion interne, notamment de véhicule automobile.

Dans les véhicules automobiles, il est envisagé que les soupapes puissent être commandées par un actionneur de type électromagnétique ou électromécanique.

Un actionneur électromagnétique ou électromécanique de soupape comprend habituellement une armature mobile, appelée plateau ou palette, et deux électroaimants fixes.

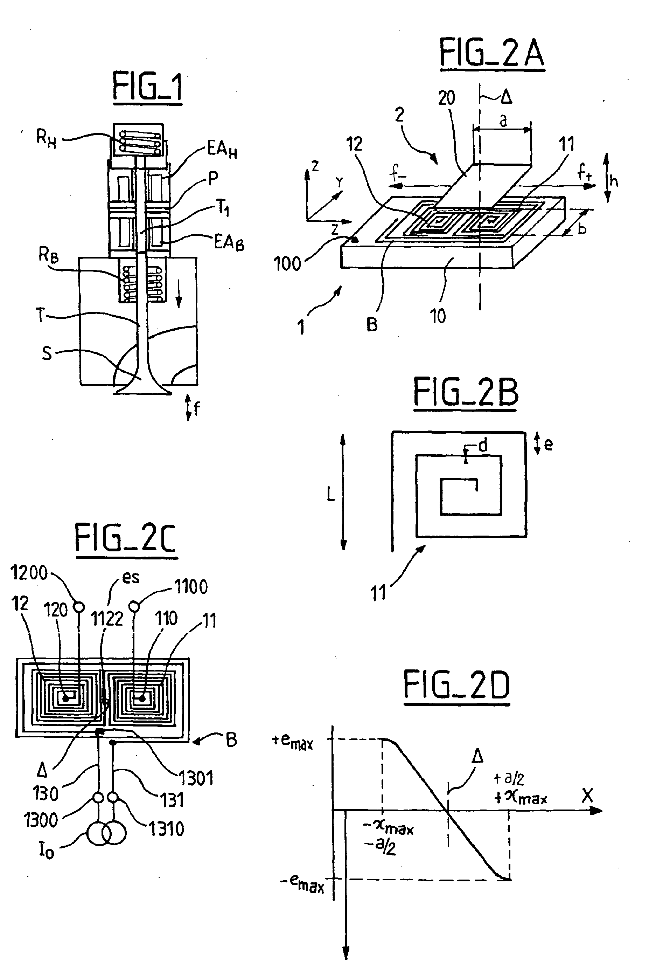

Une telle structure est illustrée schématiquement par la figure 1.

L'armature mobile $P$ se déplace linéairement entre les deux électro-aimants, que l'on appellera arbitrairement haut $EA_H$ et bas $EA_B$, et commande le déplacement de la tige $T$ ou queue de la soupape $S$ en combinaison avec deux ressorts $R_H$ et $R_B$.

Les deux électro-aimants, $EA_H$ et $EA_B$, permettent de maintenir en position haute et basse l'armature mobile $P$ (respectivement la soupape $S$ en position fermée et ouverte). Ils permettent aussi de fournir l'énergie nécessaire pour vaincre les frottements afin que les ressorts $R_B$ et $R_H$ puissent déplacer l'armature P. Quand l'armature $P$ se déplace vers la position haute, l'extrémité d'une tige $T_1$ solidaire de l'armature s'éloigne de l'extrémité de la tige $T$ et le ressort $R_B$ entraîne la tige $T$ vers le haut pour positionner la soupape en position fermée. Pour positionner la soupape en position ouverte, l'armature $P$ est déplacée vers le bas grâce à l'attraction de l'électroaimant $EA_B$ et à l'action du ressort $R_H$ et à l'encontre du ressort $R_B$, la tige $T_1$ repoussant alors la tige $T$.

Les mouvements de va et vient de la soupape sont symbolisés sur la figure 1 par la double flèche $f$.

Cette structure rend les actionneurs de soupapes bruyants par nature, en raison des chocs répétés de l'armature mobile $P$ contre les électro-aimants $EA_H$ et $EA_B$, des chocs de l'extrémité de la tige $T_1$ contre l'extrémité de la tige $T$, ainsi que des chocs de la soupape contre son siège.

On sait qu'une bonne maîtrise du niveau acoustique nécessite de faire appel à un système d'asservissement dit en boucle fermée, qui utilise une information de position du plateau P. Pour ce faire, il est nécessaire de mettre en oeuvre un capteur de position linéaire du plateau $P$.

Dans le domaine préféré d'application de l'invention, c'est-à-dire celui des moteurs à combustion interne dont les soupapes sont associées à des actionneurs de type électromagnétique ou électromécanique, il faut respecter un certain nombre de contraintes ou exigences pour la réalisation d'un capteur linéaire, en particulier :

- l'exigence de la maîtrise du niveau acoustique implique de connaître la position du plateau avec une grande précision, typiquement une résolution de l'ordre de 10 $\mu$m ;
- la plage de fonctionnement en température est large, par exemple comprise entre -50°C et +150°C ; et
- l'étendue de la mesure concerne un déplacement relativement faible, typiquement 8 mm, soit de +4mm à -4mm.

L'environnement dans lequel le capteur est destiné à fonctionner est très difficile. Les principales contraintes pouvant influer sur les propriétés et caractéristiques du capteur sont les suivantes :

- gradients de température importants pouvant provoquer des dérives thermiques du signal de sortie du capteur, des jeux mécaniques aléatoires sur le système, une dilatation des matériaux ;
- exposition à des champs électromagnétiques extérieurs pouvant fausser les valeurs du signal de sortie du capteur ;
- exposition à un environnement physico-chimique agressif : présence d'humidité, d'hydrocarbures, fort taux d'encrassement, etc.

Enfin, il existe une contrainte additionnelle majeure que doit respecter le capteur : il doit être de faible encombrement, car il doit pouvoir être intégré dans un faible volume disponible dans l'actionneur de soupape.

De façon pratique, un capteur comporte deux composants principaux : un transducteur générant un signal électrique et un circuit dit conditionneur de ce signal électrique.

Le transducteur comprend au moins un élément sensible qui permet la détection du mouvement de la soupape $S$ ou d'une pièce qui lui est assujettie, par exemple le plateau $P$, et la conversion de la grandeur mécanique associée en une grandeur électrique : un signal électrique de sortie.

Le conditionneur réalise la mise en forme et le traitement électronique du signal de sortie généré par le transducteur, de façon à le rendre plus exploitable par les circuits précités d'asservissement en boucle fermée.

Toujours de façon pratique, seuls des capteurs mettant en oeuvre des technologies sans contact doivent être considérés comme réalistes, au vu des contraintes expliquées ci-dessus. Les capteurs sans contact sont également privilégiés dans l'industrie automobile pour leur fiabilité.

Théoriquement, il serait possible de faire appel à diverses technologies connues telles que des capteurs à effet Hall, des capteurs capacitifs, des capteurs inductifs (par exemple à noyau plongeur) ou des capteurs optiques.

Cependant ces technologies ne sont pas dépourvues d'inconvénients. Ainsi, avec les capteurs à effet Hall, les capteurs capacitifs ou les capteurs inductifs, le transducteur et le conditionneur doivent être solidaires. En effet, ces capteurs fonctionnent avec de faibles courants. Si le transducteur et le conditionneur sont éloignés l'un de l'autre, le risque existe d'obtenir un rapport signal sur bruit trop important et, de ce fait, de perdre le signal utile.

Il en résulte que, en ce qui concerne ces types de capteurs, le conditionneur doit être placé avec le transducteur dans l'environnement thermique et physico-chimique agressif précité, ce qui ne convient pas à un actionneur de soupape.

On conçoit également aisément que les capteurs optiques mettant en oeuvre la technologie optique ne peuvent non plus être retenus en raison d'une exigence de tenue à l'encrassement incompatible avec l'application envisagée.

L'invention vise à remédier aux inconvénients des dispositifs de l'art connu et à répondre aux besoins et exigences qui se font sentir dans les applications propres à l'invention et dont certains viennent d'être rappelés.

L'invention concerne donc un capteur de position d'un actionneur de soupape pour un moteur à combustion interne, notamment de véhicule automobile, qui comprend un transducteur et un conditionneur.

Selon une première caractéristique importante, il est fait appel à une technologie mettant en oeuvre des courants de Foucault pour la réalisation du transducteur du capteur de position.

On sait que de tels capteurs sont sans contact mécanique et fournissent des signaux de déplacement linéaire ou angulaire et de vitesse.

Selon une autre caractéristique de l'invention, le transducteur est associé à un organe que l'on appellera ci-après une cible. Cette cible est assujettie à un organe mobile assujetti à une soupape dont on désire acquérir la position instantanée, avantageusement le plateau précité ou la tige associée à ce plateau. La position de cet organe est mesurée par rapport à la position du capteur proprement dit. La cible est en métal conducteur de l'électricité.

On a constaté qu'un tel capteur à courant de Foucault permet de satisfaire aux contraintes sévères de l'environnement d'un moteur à combustion interne.

Dans un mode de réalisation préféré, le transducteur présente une structure différentielle. Le mode de fonctionnement différentiel du transducteur présente l'avantage de pouvoir s'affranchir de signaux parasites qui s'éliminent mutuellement en grande partie, comme expliqué ci-après.

Le transducteur met en oeuvre des enroulements formant bobines, à couplage électromagnétique.

Toujours dans un mode de réalisation préféré, ces enroulements sont réalisés sous la forme de bobines planes imprimées ou gravées sur des circuits souples, avantageusement sur des films de polyimide, par exemple à base de Kapton ® (marque déposée par la société DuPont).

Le kapton ® est un matériau très résistant et qui peut-être utilisé à des températures très élevées, typiquement de l'ordre de 220°C, ce qui le rend compatible avec les applications propres à l'invention.

Cette disposition présente de nombreux avantages :

- ce matériau apporte une protection thermique des bobines ;
- ce matériau forme une protection contre l'environnement physico-chimique agressif dans lequel sont plongés les bobines du transducteur ; et
- la flexibilité du circuit souple permet d'insérer un transducteur de petite taille dans l'environnement réduit disponible des actionneurs électromagnétiques.

Dans un mode de réalisation préféré de l'invention, le conditionneur met en oeuvre une technologie de détection synchrone.

Dans une variante préférée encore, permise notamment par la détection synchrone, le conditionneur est déporté par rapport au transducteur, ce qui permet de réaliser une télémesure.

Cette caractéristique offre de nombreux avantages et, notamment, elle permet de s'affranchir des environnements thermiques et physico-chimiques agressifs. En effet, le conditionneur peut être placé dans un lieu protégé des gradients thermiques importants et des agressions physico-chimiques.

En outre, en déportant le conditionnement des signaux générés par les transducteurs, il devient possible de mettre en oeuvre un seul conditionneur (par exemple réalisé à base d'un circuit intégré unique du type dit "Application Specific Integrated Circuit" ou "ASIC", selon la terminologie anglo-saxonne, pour "Circuits Intégrés Spécialisés") pour traiter la totalité des signaux électriques de sortie provenant de l'ensemble des soupapes. Il s'ensuit que la réalisation du système de conditionnement n'impliquera qu'un coût relativement peu élevé et une simplification de la conception, par comparaison à une réalisation où l'on prévoit un conditionneur par soupape.

L'invention a donc pour objet principal un capteur de la position d'un premier organe assujetti à un actionneur de soupape électromagnétique ou électromécanique destiné à un moteur à combustion interne, cet organe étant animé d'un mouvement de translation alternatif, selon une direction déterminée, en synchronisme avec le mouvement du plateau de l'actionneur, caractérisé en ce qu'il comprend un deuxième organe, dit cible, en matériau conducteur de l'électricité, assujetti au premier organe, de manière à suivre les mouvements de translations alternatifs, un transducteur comprenant un premier enroulement, dit primaire, alimenté par un courant alternatif de fréquence déterminée et des deuxième et troisième enroulements connectés selon une configuration "série-opposition" par une première extrémité commune, en ce que l'enroulement primaire induit des courants de Foucault dans la cible et est couplé électromagnétiquement aux deuxième et troisième enroulements, ces enroulements étant en outre couplés électromagnétiquement, en ce que les enroulements sont sur un support fixe, symétriquement par rapport à un axe lié à ce support, de manière à ce que soit créée, par induction électromagnétique, entre les secondes extrémités des deuxième et troisième enroulements, une tension, dite de sortie, générée par le transducteur, proportionnelle à la différence des tensions induites par les courants de Foucault dans les deuxième et troisième enroulements, respectivement, et en ce qu'il comprend un circuit, dit conditionneur, recevant, sur une première voie d'entrée, la tension de sortie et, sur une seconde voie d'entrée, un signal électrique alternatif, dit de référence, de fréquence identique à la fréquence déterminée, le circuit conditionneur comprenant un circuit de démodulation synchrone, de manière à générer en sortie un signal électrique représentatif de la position instantanée de la cible le long de la direction déterminée.

De préférence, les enroulements sont disposés symétriquement par rapport à un axe lié au support.

Dans une réalisation, l'actionneur de soupape comprenant un plateau disposé entre deux électroaimants, dits haut et bas, le plateau étant solidaire d'une tige d'entraînement d'une soupape, le premier organe auquel est assujettie la cible est constitué par le plateau ou par la tige d'entraînement.

En variante, la soupape étant prolongée par un organe dit queue de soupape, la cible est solidaire de cette queue de soupape, celle-ci formant le premier organe et lui communiquant le mouvement de translation alternatif.

Selon un mode de réalisation, la fréquence déterminée est dans la gamme des radiofréquences, par exemple égale à 200 kHz environ.

La cible est, par exemple, une tige métallique comprenant au moins une dent disposée suivant la direction déterminée. Dans ce cas, le matériau conducteur de l'électricité de la cible est, par exemple, de l'aluminium.

Selon une réalisation, les premier à troisième enroulements sont constitués de bobines plates, gravées ou imprimées sur un support souple. Dans ce cas, le support souple est, par exemple, en polyimide. L'enroulement primaire peut comprendre plusieurs spires bobinées autour des enroulements secondaires connectés en "série-opposition".

Le circuit de démodulation synchrone du circuit conditionneur peut comprendre une boucle à verrouillage de phase.

Dans un mode de réalisation, l'actionneur comportant un bâti, le transducteur et la cible sont disposés dans une ouverture de ce bâti, fermée par un bouchon de réglage de la raideur d'un ressort et du positionnement du capteur par rapport à la cible, le transducteur étant disposé coaxialement à la cible à l'intérieur d'un tube formant paroi externe. Dans ce cas, le tube est, de préférence, en un matériau offrant une protection contre les champs électromagnétiques, par exemple en aluminium. Le transducteur peut comporter une paroi interne en matériau isolant électrique, par exemple en matière plastique.

Selon une réalisation, le conditionneur est à distance du transducteur et de la cible, et en ce qu'il reçoit la tension de sortie générée par le transducteur par l'intermédiaire de fils de liaison, de manière à réaliser un système de télémesure. Dans ce cas, si le moteur comprend une pluralité de soupapes et d'actionneurs de soupapes, et si chacune des soupapes est associée à un transducteur, de préférence, les circuits conditionneurs recevant les tensions de sorties générées par les transducteurs sont regroupés en un circuit intégré unique, par exemple de type ASIC.

L'invention va maintenant être décrite de façon plus détaillée et d'autres avantages et caractéristiques apparaîtront en se référant aux dessins annexés, parmi lesquels :

- la figure 1 illustre schématiquement un exemple de réalisation d'un actionneur électromagnétique pour soupape de moteur à combustion interne selon l'art connu ;
- la figure 2A illustre schématiquement un transducteur de position à courant de Foucault coopérant avec une cible selon un mode de réalisation préféré de l'invention ;
- la figure 2B illustre schématiquement des bobinages primaires et secondaires du transducteur de la figure 2A ;
- la figure 2C illustre l'agencement des bobinages primaire et secondaires du transducteur de la figure 2A ;
- la figure 2D représente la courbe de la tension de sortie du transducteur en fonction du déplacement de la cible suivant un axe ;
- la figure 3 illustre schématiquement un circuit conditionneur de la tension de sortie du transducteur mettant en oeuvre un détecteur synchrone ;
- la figure 4 illustre schématiquement le détecteur synchrone du circuit de la figure 3 ;
- les figures 5A et 5B illustrent schématiquement deux configurations de capteurs de position à courants de Foucault selon l'invention ;
- la figure 6 illustre schématiquement un exemple de réalisation pratique d'un capteur de position à courants de Foucault selon l'invention; et
- les figures 7A à 7L illustrent schématiquement des exemples de configurations de bobinages de transducteur sur des circuits souples.

Dans ce qui suit, sans en limiter en quoi que ce soit la portée, on se placera ci-après dans le cadre de l'application préférée de l'invention, sauf mention contraire, c'est-à-dire dans le cas d'un capteur de position pour un actionneur électromagnétique pour soupape de moteur à combustion interne.

Un tel capteur et des variantes de réalisation vont être décrites par références aux figures 2 à 7L. L'actionneur électromagnétique peut être identique ou pour le moins tout à fait similaire, quant à sa configuration générale, à celui décrit avec la figure 1. Le capteur de position selon l'invention, et cela constitue un avantage supplémentaire, ne nécessite pas de modification de cette configuration générale, seulement des modifications mineures qui seront détaillées ci-après.

Sur les figures 1 à 7L, les éléments identiques portent les mêmes références et ne seront re-décrits qu'en tant que de besoin.

Comme il a été précédemment indiqué, selon une des caractéristiques importantes de l'invention, le capteur fait appel aux courants de Foucault. Il comprend trois composants principaux : un transducteur, une cible et un conditionneur.

La figure 2A illustre de façon schématique la configuration des deux premiers composants, le transducteur, sous la référence générale 1, et la cible, sous la référence générale 2, et la façon dont ils coopèrent.

On a représenté sur la figure 2A un trièdre d'axes de références orthonormés *ZYX*.

Le transducteur 1 est constitué essentiellement d'un enroulement dit primaire, 13, et de deux enroulements, dits secondaires, 11 et 12, formant bobines électromagnétiques et disposés sur la paroi supérieure 100 d'un support 10. Les bobines secondaires, 11 et 12, sont disposées symétriquement de part et d'autre d'un axe central Δ au support 10. La paroi 100 est substantiellement plane. L'axe Δ est parallèle à l'axe de référence *Z* et orthogonal à la paroi 100, cette dernière étant, de ce fait, parallèle au plan *XY*.

Le transducteur 1 s'apparente à un transformateur différentiel constitué d'un circuit primaire, la bobine 13, et de deux circuits secondaires, les bobines 11 et 12, qui sont identiques.

Dans un mode de réalisation préféré, le circuit primaire 13 et les deux circuits secondaires, 11 et 12, sont constitués de bobines électromagnétiques plates, formées de spires imprimées ou gravées sur la surface d'un circuit imprimé constitué par le support 10.

La figure 2B illustre schématiquement l'une des bobines, par exemple la bobine 12. Elle est caractérisée par plusieurs paramètres:

- le nombre de spires *N,* trois dans l'exemple décrit ;
- la largeur des spires *d,* c'est-à-dire la largeur des traits gravés ou imprimés ;
- la largeur inter traits *e* ; et
- la largeur *L* d'encombrement de la bobine.

La figure 2C illustre schématiquement l'agencement des bobines 11 à 13, les unes par rapport aux autres, d'une part, et par rapport au support 10 et à l'axe central de symétrie Δ, d'autre part.

La symétrie du transducteur 1 permet de s'affranchi de toutes perturbations extérieures pouvant fausser la mesure (signaux de bruit, défauts de réalisation mécanique, perturbation électromagnétique, etc.).

Les deux bobines, 11 et 12, sont montées en série-opposition et sont connectées par une borne centrale 1122, en un point confondu avec l'axe Δ. Les connexions centrales des bobines ressort sous le support 10, par des trous métallisés, par exemple, sous la forme de deux liaisons, 110 et 120, aboutissant à des terminaisons ou bornes, 1100 et 1200, respectivement.

La bobine primaire 13, qui peut également comprendre plusieurs spires, entoure les deux bobines secondaires, 11 et 12. Deux bornes d'entrée, 1300 et 1310, se prolongeant par des liaisons 130 et 131, respectivement, sont connectées aux deux extrémités de la bobine 13. Comme précédemment, on peut prévoir un trou métallisé 1301, de façon à relier l'extrémité interne de la bobine 13 à la borne d'entrée 1300.

Le transducteur 1 doit être symétrique. En effet, la symétrie du transducteur 1 est un aspect primordial, car elle permet de s'affranchir de toutes perturbations extérieures pouvant fausser la mesure (signal de bruit, défauts de réalisation mécanique, perturbation électromagnétique, etc.).

On se reporte de nouveau à la figure 2A. La cible 2 est constituée d'une tige métallique conductrice d'électricité possédant une ou plusieurs dents et donc une ou plusieurs encoches, suivant l'axe X (parallèlement au mouvement de translation alternatif de la cible 2). Pour simplifier la description, on suppose tout d'abord, qu'elle ne comporte qu'une seule dent 20 (ou une seule encoche), comme illustré sur la figure 2A. La cible 2 est entraînée par le plateau *P*.

Chaque dent 20 peut être assimilée à une lame métallique dont la largeur est a, dans le sens du déplacement de la cible mobile 2 (c'est-à-dire parallèlement à l'axe X). Cette largeur a est égale à la largeur d'une bobine secondaire. Les déplacements de la cible 2 sont symbolisés par les flèches $f_+$ (vers la droite, sur la figure 2A) et $f_-$ (vers la gauche), respectivement.

On désigne par *b* la hauteur, suivant l'axe Y de la figure 2A, du bobinage secondaire dans le sens perpendiculaire au déplacement, $f_+$ - $f_-$. Avantageusement, on choisit la largeur « a », suivant l'axe X de la dent, égale à la largeur d'une bobine du secondaire suivant cet axe, les deux secondaires étant identiques.

On va maintenant décrire le fonctionnement de l'ensemble transducteur 1 et cible 2, lorsque cette dernière est entraînée en mouvement de translation alternatif par le plateau *P* (figure 1).

Comme le montre plus particulièrement la figure 2C, la bobine primaire 13 est alimentée, sur ses deux bornes d'entrée, 1300 et 1301, par une source de courant alternative $I_0$, avantageusement sinusoïdale, dans la gamme des radiofréquences. Pour fixer les idées, la fréquence $f_0$ de ce courant $I_0$ est typiquement de l'ordre de 200 kHz. Ces radiofréquences induisent des courants de Foucault dans la cible 2.

A tout instant, la force électromotrice induite aux bornes d'une des deux bobines secondaires, par exemple 11, se soustrait de la force électromotrice qui se développe aux bornes de l'autre bobine secondaire, par exemple 12, du fait du montage "série-opposition" précité.

De façon plus précise, la force électromotrice $e_s$ induite entre les bornes de sortie, 1100 et 1200, des deux bobines secondaires, 11 et 12, résulte des contributions suivantes :

- la force électromotrice $e_1$ induite par la bobine primaire 13 dans la première bobine secondaire 11 ;
- la force électromotrice $e_{1f}$ induite par les courants de Foucault présents dans la cible 2 dans la première bobine secondaire 11 ;
- la force électromotrice $e_2$ induite par la bobine primaire 13 dans la seconde bobine secondaire 12 ; et
- la force électromotrice $e_{2f}$ induite par les courants de Foucault présents dans la cible 2 dans la seconde bobine secondaire 12.

Du fait du montage "série-opposition" des deux bobines secondaires, 11 et 12, la relation suivante est satisfaite :

$$e_s = (e_2 - e_{2f}) - (e_1 - e_{1f}) \qquad (1)$$

Comme les deux bobines secondaires, 11 et 12, sont identiques et symétriques, la relation :

$$e_1 = e_2 \qquad (2)$$

est également satisfaite.

En combinant les relations (1) et (2), on obtient finalement la relation suivante :

$$e_s = e_{1f} - e_{2f} \qquad (3)$$

De l'examen de la relation (3), il ressort que la tension qui se développe entre les bornes 1100 et 1200 des bobines secondaires, 11 et 12, montées en "série-opposition", ne dépend que de la différence des tensions induites par les courants de Foucault générés dans la cible 1.

La valeur de la tension $e_s$ dépend essentiellement des paramètres suivants :

- la distance $h$ (figure 2A) entre la cible 2 et le transducteur 1 et le déplacement de la cible au-dessus du transducteur ;
- la nature du métal conducteur constituant la cible 2 ; et
- la forme de la cible 2 et la fréquence d'excitation $f_0$ du courant injecté $I_0$ dans la bobine primaire 13.

La distance $h$ est constante dans le mode de réalisation du capteur selon l'invention, la cible 2 étant animée d'un mouvement de translation alternatif, $f_+$ et $f_-$, entre deux positions extrêmes (non expressément référencées).

Le métal conducteur formant la cible 2 peut être ferromagnétique ou non. Cependant, dans la pratique, les cibles ferromagnétiques présentent des problèmes car elles génèrent une hystérésis magnétique qui a tendance à dégrader la précision de la mesure.

L'utilisation de l'acier inoxydable (inox) n'est pas conseillée pour les applications visées par l'invention, car au-delà d'une température de 150°C, apparaissent dans l'inox des rémanences magnétiques pouvant perturber la mesure (en introduisant une hystérésis).

De façon préférentielle, mais non exclusive, on utilisera de l'aluminium.

La tension $e_s$ aux bornes des bobines secondaires, 11 et 12, est due aux surfaces différentes de recouvrement de ces bobines secondaires par la cible 2. Lorsque la cible 2 recouvre toute la surface d'une des deux bobines secondaires, 11 ou 12, le signal de sortie $e_s$ est maximal. Le signal de sortie $e_s$ est nul dans le cas où la cible 2 recouvre exactement la même surface des deux des bobines secondaires, 11 et 12, c'est à dire lorsque l'axe de symétrie (non représenté) de la cible 2 coïncide avec l'axe de symétrie $\Delta$ des ces bobines secondaires, 11 et 12.

Les relations suivantes sont satisfaites, du moins avec une bonne approximation :

$$e_{1f} = k(a + x) \qquad (4)$$

$$e_{2f} = k(a - x) \qquad (5)$$

avec $k$ constante de proportionnalité, $a$ la largeur précitée de la lame métallique formant la dent 20 et $x$ un décalage parallèle à l'axe $X$, par rapport à l'axe $\Delta$, de la cible 2.

En combinant les relations (4) et (5), et en tenant compte de la relation (3), on obtient finalement :

$$e_s = 2kx \qquad (6)$$

La tension de sortie est représentée de façon plus générale par la courbe de la figure 2D : $e_s$ en fonction de l'abscisse $X$. Elle passe par deux maxima, $+e_{max}$ et $-e_{max}$, positif et négatif, respectivement, pour les abscisses $+x_{max}$ et $-x_{max}$, par rapport à l'axe $\Delta$. La tension $e_s$ s'annule pour le cas précédemment signalé. Dans la pratique, seule la zone centrale linéaire de la courbe, entre $+x_{max}$ et $-x_{max}$, est utilisée. Elle correspond à l'approximation signalée, la relation (6) étant alors satisfaite et la tension $e_s$ étant une fonction linéaire du déplacement de la cible 2 suivant l'axe X et donc sa position instantanée.

Il est clair qu'il est également possible de disposer plusieurs structures différentielles du type qui vient d'être décrit en série pour augmenter la plage de mesure.

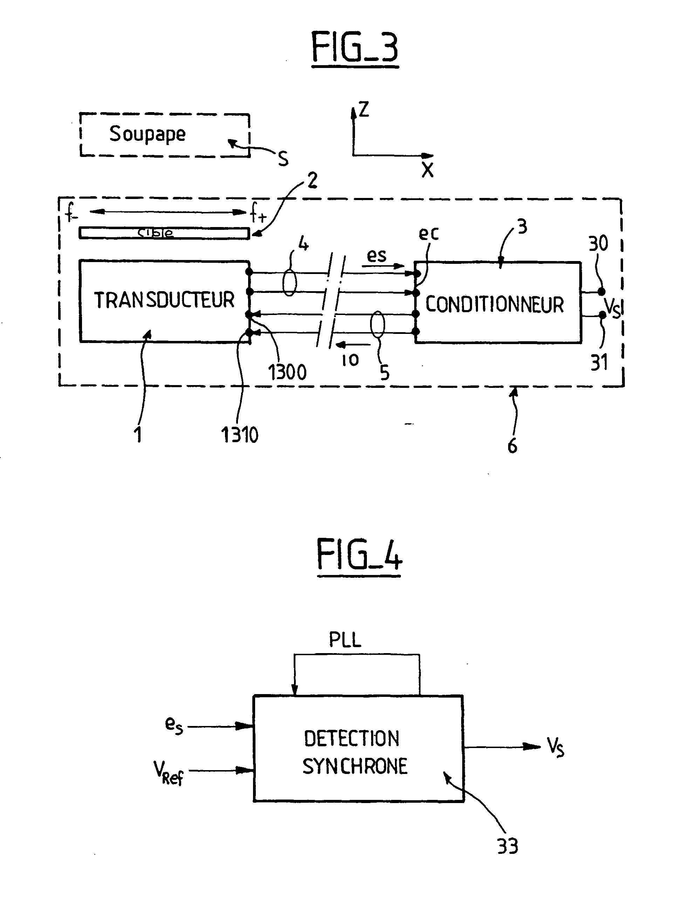

On va maintenant décrire, par référence à la figure 3, le troisième composant du capteur, que l'on référencera désormais 6 (symbolisé par un cadre en traits pointillés), à savoir le conditionneur 3, et décrire son fonctionnement.

Sur la figure 3, on a représenté de façon très schématique les trois composants principaux du capteur 6 et leurs interconnexions : le transducteur 1, la cible 2 et le conditionneur 3.

La cible 2, comme il a été indiqué précédemment, est liée mécaniquement au plateau $P$ ou à la soupape $S$ (symbolisée par un simple cadre en traits pointillés) et suit son mouvement de translation alternatif.

Le conditionneur 3 reçoit sur des bornes d'entrée, référencées globalement $e_C$, les signaux de sorties $e_s$ générés par le transducteur 1 (bornes de sorties 1100 et 1200), via des fils de liaison 4. Il peut comprendre, comme illustré sur la figure 3, des circuits internes (non représentés) générant le courant $I_0$, de radiofréquence $f_0$. Naturellement, ce courant peut être généré par des circuits externes, mais, en tout état de cause, il doit être transmis aux circuits du conditionneur 3, comme précisé ci-après. Dans l'exemple décrit, des seconds fils de liaison 5 véhiculent le courant $I_0$ vers les bornes d'entrées 1300 et 1310 du transducteur 1.

Le signal $V_s$ généré sur des bornes de sortie, 30 et 31, du conditionneur 3 est obtenu par démodulation synchrone du signal $e_s$ à l'aide d'un signal de référence à la fréquence $f_0$.

La détection synchrone est connue en soi de l'Homme de Métier, et il est inutile de la décrire en détail. La démodulation synchrone permet de détecter des signaux de très faible amplitude, à l'aide d'amplificateurs, de circuit connus sous la dénomination anglo-saxonne "Phase Locked Loop" ou "PLL" (pour "Boucle à Verrouillage de Phase"), et de filtres. Ces signaux sont dans la pratique indétectables par des appareils de mesure classiques.

De façon préférentielle, comme suggéré par la figure 3, le conditionneur 3 est disposé à distance de l'ensemble "transducteur 1 - cible 2".

La figure 4 illustre très schématiquement un circuit de détection synchrone, référencé 33. Il comporte deux voies d'entrée, un signal de référence $V_{ref}$ et le signal à mesurer de très faible amplitude, soit $e_s$, tous deux caractérisés par une fréquence identique $f_0$.

Le signal de référence $V_{ref}$ possède une amplitude suffisante pour être détectable de façon classique. Il permet donc au circuit de détection synchrone 33 de centrer la détection sur la fréquence $f_0$. Dés lors, le signal $e_s$, *a priori* noyé dans du bruit, est filtré en entrée et en sortie à la fréquence $f_0$, par des filtres (non représentés) de sélectivité appropriée, accompagnés d'un circuit de type "PLL" précité. La constante de temps, que l'on appellera $T_c$, des filtres de sortie permet de réduire la bande passante du circuit "PLL", de manière à se positionner

sur $f_0$ de façon plus précise. Le bruit entachant le signal $e_s$ peut alors être quasiment éliminé.

Dans une réalisation, la détection synchrone comporte quatre bornes de sortie (non montrées en détail) délivrant, respectivement, la composante réelle du signal $V_s$ de sortie, la composante imaginaire de ce signal, son module et sa phase.

Les dispositions propres à l'invention - mettant en oeuvre une démodulation synchrone et la symétrie des enroulements du capteur à courants de Foucault - permettent de répondre aux caractéristiques et aux contraintes de fonctionnement rappelées dans le préambule de la présente description.

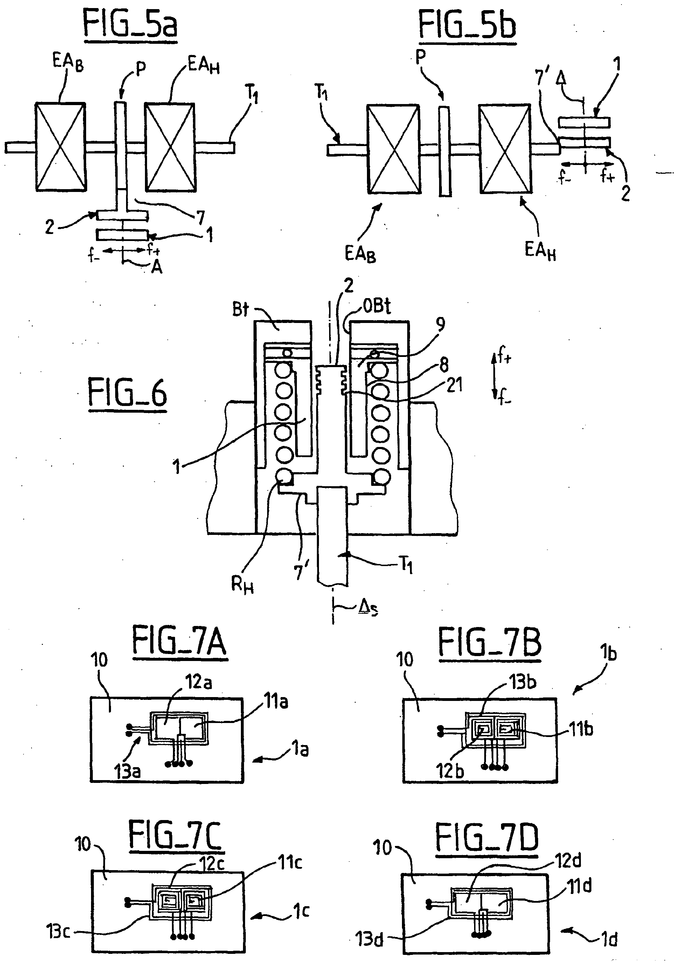

On va maintenant décrire, par référence aux figures 5A et 5B, des configurations pratiques de capteurs de position selon l'invention, en particulier en ce qui concerne l'intégration de la cible 2 dans un actionneur de soupape, électromagnétique ou électromécanique.

Il existe en effet deux configurations principales possibles :

- Figure 5A : montage de la cible 2 entre les deux électro-aimants, haut $EA_H$ et bas $EA_B$, de l'actionneur ; et
- Figure 5B : montage de la cible 2 en extrémité de la tige $T_1$ de l'actionneur.

Dans les deux configurations, l'actionneur proprement dit est identique ou, pour le moins, tout à fait similaire à l'actionneur décrit en regard de la figure 1. On se reportera à cette figure et à la description qui en a été faite.

Dans la configuration de la figure 5A, la cible 2 est entraînée par le plateau P, suivant le mouvement de translation alternatif de celui-ci (flèches $f_+$ et $f_-$), ce par l'intermédiaire d'un organe mécanique classique de fixation 7 l'assujettissant au plateau $P$.

Dans la configuration de la figure 5B, la cible 2 est entraînée par la tige $T_1$ à l'une des extrémités de laquelle elle est assujettie, par tout moyen de fixation classique approprié 7' (non expressément représenté). Cette tige $T_1$ entraîne la cible 2 suivant le mouvement de translation alternatif (flèches $f_+$ et $f_-$) de celle-ci.

Dans les deux configurations, le transducteur 1 est immobile dans un espace défini par le trièdre orthonormé XYZ (figure 2A). Le conditionneur 3 (figure 3) n'a pas été représenté.

On va maintenant décrire, par référence à la figure 6, un exemple de réalisation pratique d'intégration d'un capteur conforme à l'invention, dans un actionneur de soupape, électromagnétique ou électromécanique.

La configuration de la figure 6 correspond à celle de la figure 5B, en ce qui concerne le positionnement de la cible 2.

Le capteur 6 a une configuration de révolution circulaire à l'intérieur du ressort $R_H$, centrée sur l'axe $\Delta_S$ de la tige $T_1$ qui la prolonge.

La cible 2 est assujettie à la tige $T_1$ par les

moyens de fixation mécaniques classiques 7' précités. Cette cible comporte plusieurs dents 21.

Le transducteur 1 est compris entre une paroi tubulaire externe 8, avantageusement en aluminium, et une paroi tubulaire interne 9, en matériau isolant électrique, par exemple en matière plastique.

L'ensemble est solidaire du bâti M de l'actionneur et est fermé par un bouchon *Bt* de réglage de la raideur d'un ressort (RH) et du positionnement du capteur par rapport à la cible. Ce bouchon comporte une ouverture centrale supérieure *OBt*.

Les autres organes du capteur 6 : conditionneur 3, etc., n'ont pas été représentés. Comme il a été précédemment indiqué, le conditionneur 3 est disposé préférentiellement éloigné de l'ensemble.

Ces dispositions présentent plusieurs avantages.

Le tube externe 8 en matériau conducteur de l'électricité contribue à protéger le transducteur 1 contre les influences des champs magnétiques extérieurs au capteur 6, qui varient avec le mouvement des ressorts, $R_B$ et $R_H$ (figure 1). Ce tube externe 8 procure donc une bonne protection électromagnétique.

Puisque le transducteur 1 est enroulé autour d'un matériau isolant 9 qui entoure la cible 2, les influences parasites dues à d'éventuelles dissymétries entre la cible 2 et le transducteur 1 sont minimisées. En outre, le matériau isolant 9 participe à la protection du transducteur 1 contre l'environnement agressif dans lequel il est plongé.

Comme il a été indiqué, dans un mode de réalisation préféré, les circuits primaire 13 (voir figure 2C) et secondaires, 11 et 12, du transducteur 1 sont des bobines planes imprimées ou gravées sur des circuits souples, avantageusement des films de polyimide, par exemple à base de Kapton ® (marque déposée par la société DuPont).

Le kapton ® est un matériau très résistant et qui peut-être utilisé à des températures très élevées, de l'ordre de 220 °C, ce qui le rend tout à fait compatible avec les applications visées par l'invention. Il présente en outre les avantages suivants :

- il apporte une protection thermique des circuits primaires et secondaires du transducteur ;
- il réalise une protection de ces circuits contre l'environnement physico-chimique agressif dans lequel ils sont plongés ; et
- la flexibilité du circuit souple en Kapton ® permet d'insérer un transducteur de petite taille dans l'environnement réduit disponible des actionneurs électromagnétiques.

Le dessin des circuits primaire et secondaires est susceptible de prendre de très nombreuses configurations.

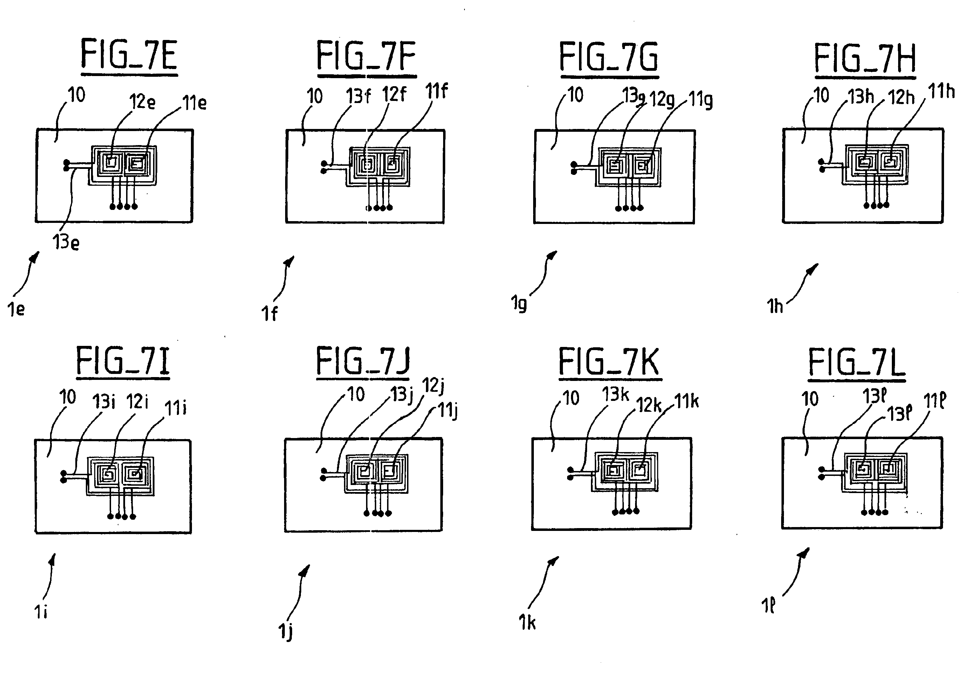

Pour fixer les idées, à titre d'illustration non exhaustive, les figures 7A à 7L représentent schématiquement diverses configurations possibles de circuits primaire, 13$_i$, et secondaires, 11$_i$ et 12$_i$, répondant aux exigences posées pour un transducteur 1$_i$ selon l'invention, *i* étant un indice qui prend les valeurs *a* à *l* pour les figures respectives 7A à 7L.

Dans toutes les configurations, les circuits secondaires, 11$_i$ et 12$_i$, sont montés en "série-opposition" et ces configurations présentent une parfaite symétrie par rapport à un axe central $\Delta$ (voir figure 2C).

Le support 10 peut être identique d'une configuration à l'autre. Pour cette raison, il n'est pas associé à un indice particulier *i*.

A la lecture de ce qui précède, on constate aisément que l'invention atteint bien les objectifs recherchés.

Le capteur selon l'invention mettant en oeuvre des courants de Foucault et associé à une démodulation synchrone présente de nombreux avantages qui ont été énumérés et qu'il est inutile de rappeler. Il autorise notamment une télémesure.

Il doit être clair cependant que l'invention n'est pas limitée aux seuls exemples de réalisations explicitement décrits, notamment en relation avec les figures 2A à 7L.

De même, la sélection de matériaux particuliers et les valeurs numériques énoncées procèdent d'un choix technologique, à la portée de l'Homme de Métier, et ceux-ci n'ont été précisés que pour mieux décrire les caractéristiques techniques du dispositif selon l'invention.

## Revendications

**1.** Capteur de la position d'un premier organe assujetti à un actionneur de soupape, électromagnétique ou électromécanique, destiné à un moteur à combustion interne, cet organe étant animé d'un mouvement de translation alternatif selon une direction déterminée (X), en synchronisme avec celui de la soupape, **caractérisé en ce qu'**il comprend :

un deuxième organe, dit cible (2), en matériau conducteur de l'électricité, assujetti au premier organe (*P*), de manière à suivre les mouvements de translations alternatifs,
un transducteur (1) comprenant :

un premier enroulement (13) dit primaire alimenté par un courant alternatif ($I_0$) de fréquence déterminée,
des deuxième et troisième enroulements (11, 12) connectés selon une configuration "série-opposition" par une première extrémité commune (1122), et couplés électromagnétiquement entre eux, l'enroulement primaire (13) induisant des courants de Foucault dans la cible (2) et étant couplé électromagnétiquement aux deuxième et troisième enroulements (11, 12),

un support fixe (10) pour les premier à troisième enroulements (11, 12, 13), ces enroulements étant disposés de manière à ce qu'il se développe, par induction électromagnétique, entre les secondes extrémités (1100, 1200) des deuxième et troisième enroulements (11, 12), une tension de sortie ($e_s$) générée par le transducteur (1), proportionnelle à la différence entre les tensions induites par les courants de Foucault dans les deuxième et troisième enroulements (11, 12), respectivement, et,

un circuit (3), dit conditionneur, recevant, sur une première voie d'entrée, la tension de sortie ($e_s$) et, sur une seconde voie d'entrée, un signal électrique alternatif ($V_{Ref}$) de référence, de fréquence identique à la fréquence déterminée, le circuit conditionneur (3) comprenant un circuit de démodulation synchrone, de manière à générer en sortie un signal électrique ($V_S$) représentatif de la position instantanée de la cible (2) le long de la direction déterminée ($X$).

2. Capteur selon la revendication 1 **caractérisé en ce que** le conditionneur est déporté par rapport au transducteur, le conditionneur étant de préférence placé dans un lieu protégé des gradients thermiques importants et des agressions physico-chimiques.

3. Capteur selon la revendication 1 ou 2 **caractérisé en ce que** les enroulements sont disposés symétriquement par rapport à un axe (A) lié au support (10).

4. Capteur selon la revendication 1, 2 ou 3, **caractérisé en ce que** l'actionneur de soupape comprenant un plateau (P) disposé entre deux électroaimants, dits haut ($E_{AH}$) et bas ($E_{HB}$), le plateau ($P$) étant solidaire d'une tige d'entraînement ($T_1$) d'une soupape ($S$), le premier organe auquel est assujettie la cible est constitué par le plateau ($P$) ou par la tige d'entraînement.

5. Capteur selon la revendication 1, 2 ou 3, **caractérisé en ce que** la soupape ($S$) étant prolongée par un organe dit queue de soupape, la cible (2) est solidaire de cette queue de soupape, celle-ci formant le premier organe et lui communiquant le mouvement de translation alternatif.

6. Capteur selon l'une quelconque des revendications précédentes, **caractérisé en ce que** la fréquence déterminée est dans la gamme des radiofréquences, par exemple égale à 200 kHz environ.

7. Capteur selon l'une quelconque des revendications précédentes, **caractérisé en ce que** la cible (2) est une tige métallique comprenant au moins une dent (21) disposée suivant la direction déterminée ($X$).

8. Capteur selon la revendication 7, **caractérisé en ce que** le matériau conducteur de l'électricité de la cible (2) est de l'aluminium.

9. Capteur selon l'une quelconque des revendications précédentes, **caractérisé en ce que** les premier à troisième enroulements (11, 12, 13) sont constitués de bobines plates, gravées ou imprimées sur un support souple (10).

10. Capteur selon la revendication 9, **caractérisé en ce que** le support souple (10) est en polyimide.

11. Capteur selon la revendication 9 ou 10, **caractérisé en ce que** l'enroulement primaire (13) comprend plusieurs spires bobinées autour des enroulements secondaires (11, 12) connectés en "série-opposition".

12. Capteur selon l'une quelconque des revendications précédentes, **caractérisé en ce que** le circuit de démodulation synchrone (33) du circuit conditionneur (3) comprend une boucle à verrouillage phase (PLL).

13. Capteur selon l'une quelconque des revendications précédentes, **caractérisé en ce que**, l'actionneur comportant un bâti ($M$), le transducteur (1) et la cible (2) sont disposés dans une ouverture de ce bâti, fermée par un bouchon ($Bt$) de réglage de la raideur d'un ressort (RH) et de positionnement du capteur par rapport à la cible, le transducteur (1) étant disposé coaxialement à la cible (2) à l'intérieur d'un tube (8) formant paroi externe.

14. Capteur selon la revendication 13, **caractérisé en ce que** le tube (8) est en un matériau offrant une protection contre les champs électromagnétiques, par exemple en aluminium.

15. Capteur selon la revendication 13 ou 14, **caractérisé en ce que** le transducteur (1) comporte une paroi interne (9) en matériau isolant électrique, par exemple en matière plastique.

16. Capteur selon l'une quelconque des revendications précédentes, **caractérisé en ce que** le conditionneur (3) est à distance du transducteur (1) et de la cible (2), et **en ce qu'**il reçoit la tension de sortie ($e_s$) générée par le transducteur (1) par l'intermédiaire de fils de liaison (4), de manière à réaliser un système de télémesure.

17. Capteur selon la revendication 16, **caractérisé en ce que**, le moteur comprenant une pluralité de soupapes (*S*) et d'actionneurs de soupapes, chacune des soupapes (*S*) étant associée à un transducteur (1), les circuits conditionneurs (3) recevant les tensions de sorties (*e_s*) générées par les transducteurs (1) sont regroupés en un circuit intégré unique, par exemple de type ASIC.

## Claims

1. A position sensor for a first body dependent upon a valve, electromagnetic or electromechanical activator, destined to be used by an internal combustion engine, such body being activated by an alternative translatory movement according to a given direction (X), in synchronisation with the movement of the valve, **characterised in that** it comprises:

   a second body, known as the target (2), made of electricity-conducting materials, dependant upon the first body (*P*) so as to follow the alternative translatory movements,
   a transducer (1) comprising:

   a first coil (13), known as the primary, powered by an alternative current (*I_0*) of a given frequency,
   second and third coils (11, 12) connected according to a "series-opposition" configuration by a first common tip (1122) and connected electromagnetically with each other, the primary coil (13) inducing eddy currents in the target (2) and being electromagnetically connected to the second and third coils (11, 12),
   a fixed support (10) for the first to third coils (11, 12, 13), such coils being placed so that the support develops, through electromagnetic induction, between the second tips (1100, 1200) of the second and third coils (11, 12), an output voltage (*e_s*) generated by the transducer (1), in proportion to the difference between the voltages induced by the eddy currents inside the second and third coils (11, 12), respectively, and,
   a circuit (3), known as a conditioner, receiving, on a first inlet, the output voltage (*e_s*) and, on a second inlet, an alternative electric reference signal (*V_Ref*), having an identical frequency to the given frequency, the conditioner circuit (3) comprising a synchronous demodulation circuit, so as to generate an output electric signal (*V_s*) representing the immediate position of the target (2) along the given direction (*X*).

2. A sensor according to claim 1, **characterised in that** the conditioner is offset in relation to the transducer, the conditioner being preferably placed in a zone protected from the major thermal gradients and the physicochemical aggressions.

3. A sensor according to claims 1 or 2 **characterised in that** the coils are placed symmetrically in relation to an axis (A) linked to the support (10).

4. A sensor according to claims 1, 2 or 3, **characterised in that** the valve activator comprises a plateau (*P*) placed between two electromagnets, known as upper (*E_AH*) and lower (*E_HB*), the plateau (*P*) being integral with a driving stem (*T_1*) of a valve (*S*), the first body on which depends the target being comprised of the plateau (*P*) or by the driving stem.

5. A sensor according to claims 1, 2 or 3, **characterised in that** the valve (*S*) is prolonged by a body known as the valve stem, the target (2) being integral with such valve stem, the latter forming the first body and transmitting the alternative translatory movement to the target.

6. A sensor according to any one of the previous claims, **characterised in that** the given frequency is included within radio frequency range, for example equal to approximately 200 kHz.

7. A sensor according to any one of the previous claims, **characterised in that** the target (2) is a metallic stem comprising at least one cog (21) placed in accordance with the given direction (X).

8. A sensor according to claim 7, **characterised in that** the target's power conducting material is aluminium.

9. A sensor according to any of the previous claims, **characterised in that** the first to third coils (11, 12, 13) are comprised of flat reels, engraved or printed on a flexible support (10).

10. A sensor according to claim 9, **characterised in that** the flexible support (10) is made of polyimide.

11. A sensor according to claims 9 or 10, **characterised in that** the primary coil (13) comprises several spires reeled around the secondary coils (11, 12) linked up through the "series-opposition" configuration.

12. A sensor according to any one of the previous claims, **characterised in that** the synchronous demodulation circuit (33) of the conditioner circuit (3) comprises a phase-locked loop (PLL).

13. A sensor according to any one of the previous claims, **characterised in that** the activator comprising a frame (*M*), the transducer (1) and the target (2) are placed in an opening of such frame, closed off by a plug (*Bt*) controlling the stiffness of a spring (*R*$_H$) and the position of the sensor in relation to the target, the transducer (1) being placed coaxially to the target (2) inside a tube (8) forming the external wall.

14. A sensor according to claim 13, **characterised in that** the tube (8) is made of material offering protection against the electromagnetic fields, for example in aluminium.

15. A sensor according to claims 13 or 14, **characterised in that** the transducer (1) comprises an internal wall (9) made of insulating electric material, for example in plastic.

16. A sensor according to any one of the previous claims, **characterised in that** the conditioner (3) is placed apart from the transducer (1) and from the target (2), and **in that** it receives the output voltage (*e*$_s$) generated by the transducer (1) through the intermediary of the connecting wires (4), hence embodying a telemetry system.

17. A sensor according to claim 16, **characterised in that**, the engine comprising a plurality of valves (*S*) and valve activators, each one of the valves (*S*) being linked to a transducer (1), the conditioner circuits (3) receiving the output voltages (*e*$_s$) generated by the transducers (1) are grouped together in a unique integrated circuit of, for example, the ASIC type.

**Patentansprüche**

1. Sensor der Stellung eines ersten, einem elektromagnetischen oder elektromechanischen Ventilantreiber für Verbrennungsmotor unterstehenden Organs, das eine wechselnde, mit der Bewegung des Antreibertellers synchronisierte Translationsbewegung in eine bestimmte Richtung (X) durchführt, **dadurch gekennzeichnet, dass** er:

   ein zweites, Zielwerk (2) genanntes, dem ersten Organ (*P*) unterstehendes Organ aus stromleitendem Material, sodass er die wechselnden Translationsbewegungen folgt,
   einen Transduktor (1) bestehend aus:

   einer ersten, sogenannten primären Wicklung (13), die mit einem Wechselstrom (*I*$_0$) von bestimmter Frequenz eingespeist ist,
   zweiter und dritter Wicklungen (11, 12), die nach einer "seriellopponierten" Gestaltung an einem gemeinsamen Ende (1122) verbunden und elektromagnetisch miteinander gekoppelt sind, sodass die primäre Wicklung (13) Wirbelströme ins Zielwerk (2) induziert und mit den zweite und dritte Wicklungen (11, 12) elektromagnetisch gekoppelt ist,

   einem festen Support (10) für die erste bis dritte Wicklungen (11, 12, 13), diese Wicklungen seiend so angeordnet, dass es sich durch elektromagnetische Induktion, zwischen den zweiten Enden (1100, 1200) der zweite und dritte Wicklungen (11, 12), eine vom Transduktor (1) generierte Ausgangsspannung (*e*$_s$) entwickelt, die jeweils proportional zur Differenz zwischen den von den Wirbelströmen in die zweite und dritte Wicklungen (11, 12) induzierten Spannungen ist, und

   einer Konditioniergerät genannten Konditionierschaltung (3), die auf einen ersten Eingang die Ausgangsspannung (*e*$_s$) und auf einen zweiten Eingang ein von bestimmter Frequenz ähnliches Bezugswechselstromsignal (*V*$_{Ref}$) erhält, Konditionierschaltung (3), die eine synchrone Demodulationsschaltung enthält, sodass im Ausgang ein Stromsignal (*V*$_s$) generiert wird, das der augenblicklichen Stellung des Zielwerks (2) entlang der bestimmten Richtung (*X*) entspricht.

2. Sensor nach Anspruch 1, **dadurch gekennzeichnet, dass** das Konditioniergerät dem Transduktor gegenüber weggedrückt wird, das Konditioniergerät seiend vorzugsweise auf einem Ort angebracht, der gegen wichtige thermische Gradienten und physisch-chemische Aggressionen geschützt ist.

3. Sensor nach Anspruch 1 oder 2, **dadurch gekennzeichnet, dass** die Wicklungen symmetrisch zu einer mit dem Support (10) verbundenen Achse (A) angeordnet sind.

4. Sensor nach Anspruch 1, 2 oder 3, **dadurch gekennzeichnet, dass** wobei der Ventilantreiber einen zwischen zwei sogenannten oberen (*E*$_{AH}$) und unteren (*E*$_{HB}$) Elektromagneten angeordneten Teller (*P*) enthält, und wobei der Teller (*P*) mit einer Antriebstange (*T1*) eines Ventils (*S*) solidarisch ist, bildet dann der Teller (*P*) oder die Antriebstange das erste Organ, dem das Zielwerk untersteht.

5. Sensor nach Anspruch 1, 2 oder 3 **dadurch gekennzeichnet, dass** wobei das Ventil (S) mit einem Ventilschaft genannten Organ verlängert wird, ist dann das Zielwerk (2) mit diesem Ventilschaft solidarisch, welche das erste Organ bildet und dem die wechselnde Translationsbewegung überträgt.

6. Sensor nach irgendeinem der vorigen Ansprüche, **dadurch gekennzeichnet, dass** die bestimmte Frequenz im Bereich der Radiofrequenzen, zum Beispiel bei ca. 200 KHz, liegt.

**7.** Sensor nach irgendeinem der vorigen Ansprüche, **dadurch gekennzeichnet, dass** das Zielwerk 2 eine metallische Stange ist, die zumindest einen Zahn (21) aufweist, der entlang der bestimmten Richtung (*X*) angeordnet ist.

**8.** Sensor nach Anspruch 7, **dadurch gekennzeichnet, dass** das stromleitende Material des Zielwerks (2) Aluminium ist.

**9.** Sensor nach irgendeinem der vorigen Ansprüche, **dadurch gekennzeichnet, dass** die erste bis dritte Windungen (11, 12, 13) aus flachen Spulen bestehen, die auf einen biegsamen Support (10) gedruckt oder geprägt sind.

**10.** Sensor nach Anspruch 9, **dadurch gekennzeichnet, dass** der biegsamen Support (10) aus Polyimide ist.

**11.** Sensor nach Anspruch 9 oder 10, **dadurch gekennzeichnet, dass** die primäre Wicklung (13) mehrere Windungen aufweist, die um seriellopponiert angeschlossene, sekundäre Wicklungen (11, 12) aufgewickelt sind.

**12.** Sensor nach irgendeinem der vorigen Ansprüche, **dadurch gekennzeichnet, dass** die synchrone Demodulationsschaltung (33) der Konditionierschaltung (3) eine Phasenverriegelungsschleife (PLL) enthält.

**13.** Sensor nach irgendeinem der vorigen Ansprüche, **dadurch gekennzeichnet, dass** wobei der Antreiber (1) ein Gestell aufweist, sind der Transduktor (1) und das Zielwerk (2) in einer Öffnung des Gestells angeordnet, die mit einem Einstellzapfen (*Bt*) zur Einstellung der Steifheit einer Feder (RH) und der Positionierung des Sensors im Verhältnis zum Zielwerk geschlossen ist, der Transduktor (1) seiend innerhalb eines Außenwand bildenden Rohres (8) koaxial zum Zielwerk (2) angeordnet.

**14.** Sensor nach Anspruch 13, **dadurch gekennzeichnet, dass** das Rohr (8) aus einem Material, das einen Schutz gegen elektromagnetische Felder anbietet, zum Beispiel aus Aluminium.

**15.** Sensor nach Anspruch 13 oder 14, **dadurch gekennzeichnet, dass** der Transduktor (1) eine Innenwand (9) aus stromisolierendem Material, zum Beispiel aus Kunststoff, aufweist.

**16.** Sensor nach irgendeinem der vorigen Ansprüche, **dadurch gekennzeichnet, dass** das Konditioniergerät (3) entfernt vom Transduktor (1) und vom Zielwerk (2) liegt, und durch Verbindungsdrähte (4) die vom Transduktor (1) generierte Ausgangsspannung ($e_s$) erhält, sodass ein Fernmessungssystem hergestellt wird.

**17.** Sensor nach Anspruch 16, **dadurch gekennzeichnet, dass** wobei der Motor eine Pluralität von Ventilen (*S*) und Ventilantreibern enthält, und wobei jedes Ventil (*S*) einem Transduktor (1) zugeordnet ist, werden die Konditionierschaltungen (3), die die von den Transduktoren (1) generierten Ausgangspannungen ($e_s$) erhalten, in einer alleinigen, integrierten Schaltung, zum Beispiel der ASIC Art, zusammengefasst.

## FIG_1

## FIG_2A

## FIG_2B

## FIG_2C

## FIG_2D

## FIG_3

Soupape — S

Z
X

f-  f+
cible  2

TRANSDUCTEUR  CONDITIONNEUR

4  es  ec  3  30

Vsi

10  5  31

1310  1300  6

## FIG_4

PLL

es →  DETECTION SYNCHRONE  → Vs

V$_{Ref}$ →

33

FIG_5a

FIG_5b

FIG_6

FIG_7A

FIG_7B

FIG_7C

FIG_7D

EP 1 584 899 B1

## FIG_7E

10    12e    11e

13e

1e

## FIG_7F

10  13f  12f  11f

1f

## FIG_7G

10   13g 12g  11g

1g

## FIG_7H

10  13h  12h  11h

1h

## FIG_7I

10   13i  12i   11i

1i

## FIG_7J

10    13j  12j

11j

1j

## FIG_7K

10   13k

12k  11k

1k

## FIG_7L

10    13ℓ

13ℓ   11ℓ

1ℓ